# EUROPÄISCHE PATENTANMELDUNG

(11) **EP 0 613 194 A1**
(43) Veröffentlichungstag der Anmeldung: **31.08.1994**
(21) Anmeldenummer: 94100285.9
(22) Anmeldetag: 11.01.1994
(51) Int. Cl.: H01L 41/09

(54) **Schwingungsanregung bei einem Schwingungsmotor mit zylinderförmigem Schwingkörper**

(30) Priorität: 26.02.1993 DE 4305894
(71) Anmelder: DAIMLER-BENZ AKTIENGESELLSCHAFT, D-70547 Stuttgart (DE)
(72) Erfinder: Schöner, Hans-Peter, Dr.-Ing., D-64397 Modautal (DE)
(74) Vertreter: Vogl, Leo, Dipl.-Ing.

(57) **Zusammenfassung**

Bei dem erfindungsgemäßen Motor erfolgt die Anregung von Eigenschwingungen in dem aus einem Hohlzylinder bestehenden Stator durch Aktoren, die an Abflachungen der äußeren und/oder inneren Mantelfläche des Hohlzylinders angeordnet sind. Insbesondere sind auf die Abflachungen geklebte Piezo-Keramik-Aktoren vorgesehen. Das Drehmoment wird durch einen in reibschlüssigem Kontakt mit der inneren oder äußeren Manteloberfläche gebrachten Rotor abgenommen.

## Beschreibung

Die Erfindung betrifft einen Schwingungsmotor, bei dem ein Antriebsmoment durch Umwandlung Von Schwingungen eines elastischen Schwingkörpers erzeugt wird. Motoren dieser Art besitzen u.a. den Vorteil hoher Halte- und Drehmomente, niedriger Geschwindigkeit, sowie kompakter Bauweise. Ein solcher Schwingungsmotor ist z.B. aus der DE-OS 39 27 040 bekannt. Er besteht u.a. aus einem Schwingstator und einem Rotor, die unter Druck in Kontakt stehen, wobei die Kontaktfläche mit einem geeigneten Reibbelag versehen ist. Mittels Dehnkörper, z.B. piezoelektrischer, Elektrostriktions- oder Magnetostriktionselementen, werden in dem elastischen Material des Stators Wanderwellen angeregt. Die Oberflächenelemente des Stators im Bereich der Kontaktfläche mit dem Rotor bewegen sich dabei auf elliptischen Bahnen. Zwischen den kraftschlüßig gekoppelten Stator- und Rotoroberflächen entstehen daher an der Kontaktzone zwischen den beiden Oberflächen tangentiale Kräfte, die zur Ausbildung einer Rotorbewegung führen. Ansteuervorrichtungen für solche Motoren sind z.B. aus den DE-OS 34 06 408 und 37 19 537 bekannt.

In einer Platte mit endlicher Dicke lassen sich Wanderwellen mit ellipsenförmiger Bahn der Oberflächenpunkte durch phasenrichtig überlagerte Schwingungen gleicher Frequenz erzeugen. Auf diese Weise können auch in einem Hohlzylinder Wanderwellen angeregt werden, so daß ein die Zylindermanteloberfläche berührender Rotor um den Zylinder herum bewegt wird. Ein Wanderwellenmotor mit zylinderförmigem Schwingkörper ist aus der DE 42 16 238 bekannt. Gegenüber Wanderwellenmotoren mit scheibenförmigen oder kreisringförmigen Statoren bzw. Rotoren, besitzen solche mit zylinderförmigem Schwingkörper den Vorteil einer größeren Fläche gleichförmiger Vortriebsbewegung, da die Schwingungsamplitude der Oberflächenelemente über einen großen Teil der Mantelfläche gleich hoch ist und nur in den Randzonen der Zylinderenden bei Schwingungsmodi ohne Knotenkreise erhöhte Schwingungsamplituden auftreten. Im Vergleich zu den erwähnten scheiben- bzw. kreisringförmigen Wanderwellenmotoren führt die Vergrößerung der wirksamen Fläche bei zylinderförmigen Motoren zu geringeren Problemen bei der Kraftübertragung vom Stator auf den Rotor. Vorteilhaft bei Motoren mit zylinderförmigem Schwinger sind auch die Wachstumsgesetze von Drehzahl und maximalem Moment: die Drehzahl ist bei festem Schwingungsmodus und fester Frequenz nur vom Radius abhängig (Proportional 1/r). Für das maximal abnehmbare Moment gilt, daß es nur von der Fläche des Zylinderbereichs konstanter Amplitude abhängig ist. Hieraus ergibt sich eine einfache Anpaßbarkeit dieses Motors an die Anforderungen unterschiedlicher Anwendungen.

Bei dem aus der DE 42 16 238 bekannten Wanderwellenmotor mit zylinderförmigem Schwingkörper erfolgt die Anregung der Wanderwellen durch Aktoren, die radialsymmetrisch und senkrecht zur Zylinderachse und gegeneinander verdreht angeordnet und durch Klemmkräfte an gegenüberliegenden Seiten des Stators gehalten werden. Vorzugsweise wird bei diesem bekannten Motor, falls piezokeramische Aktoren verwendet werden, der longitudinale piezoelektrische Effekt verwendet, so daß infolge der damit verbundenen geringeren Auslenkung der piezoelektrischen Aktoren im Vergleich mit dem transversalen piezoelektrischen Effekt, der Einsatz von zusätzlichen elastischen Übertragungsmitteln zwischen Aktoren und Schwingkörper angebracht ist.

Ein weiterer Schwingungsmotor ist aus der DE-OS 32 13 275 bekannt. Im Unterschied zum Wanderwellenmotor erfolgt hier die Erzeugung eines motorischen Moments durch an einem ihrer Enden an einem Oszillator angebrachte Stößel, die mit den anderen Enden an mindestens einer Oberfläche reibschlüssiger Zusammenwirkung zwischen einem Läufer und einem Ständer angedrückt sind und durch in dem Oszillator angeregte Stehwellen in Schwingungen versetzt werden. Bei einer Ausführungsform dieses Motors ist der Läufer als ein Zylindergehäuse ausgeführt, während der Oszillator einen Ring darstellt, an dem mit einem Ende die Stößel befestigt sind, während deren andere Enden an die innere Zylinderfläche des Läufers elastisch angedrückt sind, welche die Oberfläche reibschlüssiger Zusammenwirkung darstellt. Der dabei verwendete Oszillator erzeugt Radialschwingungen, die sich normal zur inneren Zylinderfläche ausbreiten. Die Stößel sind als Lamellen aus-geführt, die an den Orten der Stehwellenschwingungsbäuche angeordnet sind und einen schrägen Winkel mit der Oberfläche des Oszillators und des Läufers bilden.

Aufgabe der vorliegenden Erfindung ist die Weiterentwicklung des Standes der Technik und insbesondere die Schaffung eines Schwingungsmotors mit zylinderförmigem Stator, bei dem eine Anregung von Eigenschwigungen des Stators in einfacher Weise, insbesondere durch mit dem transversalen piezoelektrischen Effekt arbeitende piezoelektrische Aktoren erfolgt.

Die Aufgabe wird erfindungsgemäß dadurch gelöst, daß bei einem Schwingungsmotor, bestehend aus einem hohlzylinderförmigen Stator aus einem elastischem Material und einem Rotor, der unter Druck in Kontakt mit dem Stator steht, sowie mindestens zwei Aktoren zur Anregung von Eigensschwingungen des Stators, für die Anregung der Eigenschwingung des Stators Abflachungen an der äußeren und/oder inneren Mantelfläche des Hohlzylinders vorgesehen sind, an denen die Aktoren angeordnet sind. Die Erfindung geht von der Idee aus, Stehwellen im elastischen Zylindermaterial durch Kontraktion und Dehnung der Abflachungen entlang der Umfangsrichtung des Zylindermantels anzuregen. Die Überlagerung von Stehwellen mit einer räumlichen Phasenverschiebung von λ/4 ( λ= Wellenlänge der Schwingung) und einer zeitlichen Phasenverschiebung von 90° führt zur Ausbildung von auf dem Zylinderumfang umlaufenden Wanderwellen. Alternativ lassen sich am Stator angebrachte Stößel durch die Eigenschwingungen des Stators zu Schwingungen zur Erzeugung eines Antriebsmoments anregen. Weitere vorteilhafte Ausführungen der Erfindung sind den Unteransprüchen zu entnehmen.

Im folgenden wird der erfindungsgemäße Schwingungsmotor anhand von Zeichnungen beispielhaft näher erläutert. Im einzelnen zeigt:
- Fig. 1: schematisch verschiedene Schwingungsformen eines Hohlzylinder-Schwingkörpers,
- Fig. 2: Maßverhältnisse zwischen der Höhe der Abflachung und der Mantelstärke bei einem Hohlzylinder für einen erfindungsgemäßen Motor,
- Fig. 3: verschiedene Konfigurationen von Abflachungen an der äußeren Mantelfläche eines Hohlzylinders für die Anregung unterschiedlicher Schwingungsformen,
- Fig. 4: Hohlzylinder mit innen und mit innen und außen angeordneten Abflachungen,
- Fig. 5: die Anordnung von Abflachungen in der Zylindermitte, außerhalb der Zylindermitte und an den Zylinderenden,
- Fig. 6: einen erfindungsgemäßen Stößelmotor.

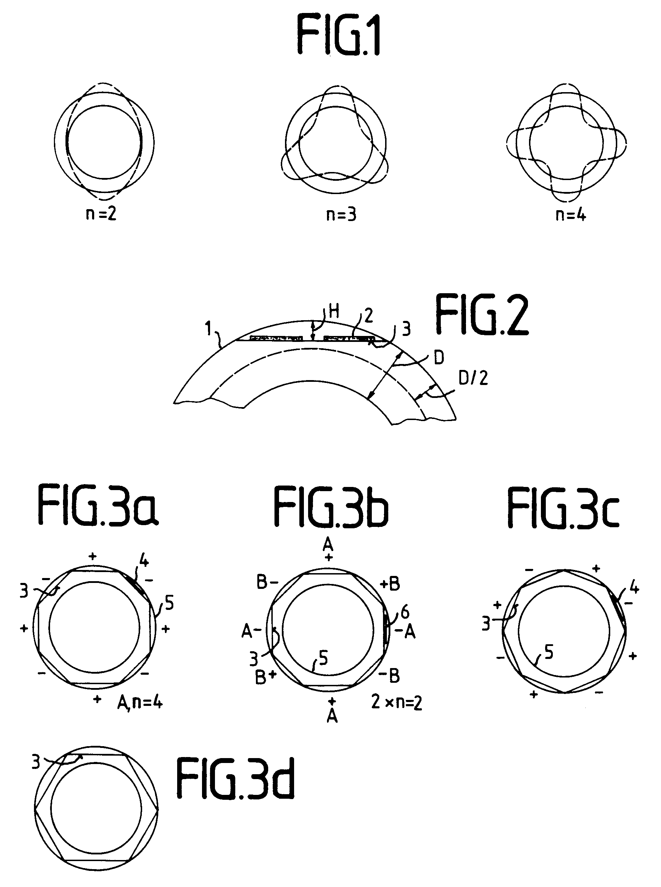

Fig. 1 zeigt verschiedene Eigenschwingungsformen eines Hohlzylinders mit zwei bzw. mit drei oder vier Wellenzügen entlang des Umfangs. Die Wellenzüge sind näherungsweise sinusförmig und entsprechen Eigenschwingungsformen einer Platte mit periodischen Randbedingungen. Erfindungsgemäß werden Eigenschwingungen eines Hohlzylinders mittels Kontraktion und Dehnung von Abflachungen seiner äußeren und/oder inneren Mantelfläche angeregt.

Fig. 2 illustriert eine bevorzugte Auslegung der Abflachungen für die Anregung von Eigenmoden mit n=2 Wellenzügen gemäß Fig. 1 in der Mantelfläche eines Hohlzylinder-Schwingkörpers 1. Handelt es sich bei den angeregten Schwingungen um stehende Wellen, so besteht zwischen den Schwingungsbäuchen einer solchen Eigenmode und dem Mittelpunkt einer Abflachung die entlang der Zylinderumfangsrichtung kontrahiert bzw. gedehnt wird, ein einfaches Zuordnungsverhältnis, solange die Kontraktion bzw. Dehnung in einer Fläche oberhalb der neutralen Faser des Zylinders stattfindet. So erzeugt eine Kontraktion entlang einer Umfangslinie bei einer außen angeordneten Abflachung eine Bewegung des Zylindermantels nach innen, während eine Dehnung zu einer Bewegung nach außen führt. Bei einem homogenen Hohlzylinder mit Mantelstärke D befindet sich die neutrale Faser im Abstand D/2 von der Manteloberfläche im Zylindermantel. Um daher bei einer Kontraktion nicht sowohl eine Bewegung nach innen als auch nach aussen zu erhalten, ist für die Höhe H der Abflachung ein Wert von H < D/2 zu wählen. Auf die durch die Abflachung 3 gebildete Fläche wird ein Aktor 2 angebracht, vorzugsweise eine Piezokeramik. Die Orientierung des Aktors 2 ist dabei so gewählt, daß er je nach Ansteuerung eine Kontraktion oder Dehnung der Abflachungsfläche 3 entlang einer Sehne in Umfangsrichtung des Hohlzylinders erzeugt. Andernfalls entsteht durch Überlagerung von kontraktiven und dehnenden Bewegungen eine kompliziertere Schwingungsform.

Fig. 3 zeigt verschiedene symmetrisch zur Zylinderachse angeordnete Konfigurationen von Abflachungen an einem Hohlzylinder für die Anregung unterschiedlicher Schwingungsformen.

Fig. 3a zeigt einen Schnitt durch einen Hohlzylinder im Bereich der Abflachungen 3. Mit einem System A von acht alternierend polarisierten piezoelektrischen Aktoren 4 (+,-) erfolgt eine Anregung mit wenigsten vier Wellenzügen am Unfang des Hohlzylinders 5. Die unterschiedliche Polarisation der Aktoren führt dazu, daß bei Anlegung einer Spannung bestimmter Polarität an das System A, benachbarte Aktoren unterschiedliches Dehnungsverhalten zeigen. Bei periodischer Anregung wird eine stehende Welle entlang des Hohlzylinders erzeugt. Im Vergleich dazu zeigt die Fig. 3b die Anordnung mit zwei Anregesystemen A, B, die beide jeweils aus vier Aktoren 6 unterschiedlicher Polarisation (+,-) bestehen und um λ/4 gegeneinander verschoben sind. Jedes einzelne dieser Systeme erzeugt stehende Wellen mit zwei Wellenzügen entlang des Umfangs. Mit einer um 90° zeitlich gegeneinander verschobenen Anregung der Systeme A und B, wird in der Konfiguration nach Fig. 3b eine Wanderwelle angeregt. Die Fig. 3c zeigt ebenfalls ein System B von acht alternierend polarisierten Aktoren 4 zur Anregung einer Eigenmode mit n=4 Wellenzügen. Durch Anordnung einer Konfiguration nach Fig. 3a an einem Ort entlang der Zylinderachse und einer Konfiguration nach Fig. 3c an einem anderen, z.B. jeweils an einem Ende eines Hohlzylinders, können durch phasengerechte Ansteuerung der Systeme A und B Wanderwellen im Hohlzylindermantel angeregt werden. Eigenmoden mit n=3 bzw. n=6 Wellenzügen, können bei einem System mit sechs Abflachungen gemäss Fig. 3d angeregt werden, je nachden ob die Aktoren abwechselnd (n=3) oder gleichsinnig (n=6) polarisiert sind.

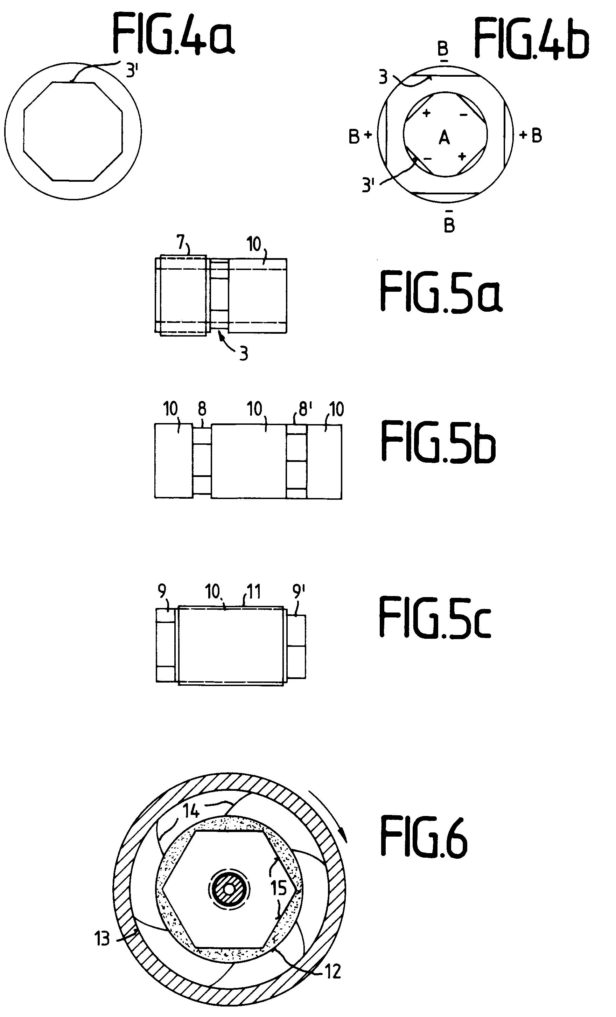

Bei anderen Ausführungsformen der Erfindung sind die Abflachungen statt an der Außenseite des Hohlzylinders an der Innenseite angeordnet. Auch in diesem Fall gilt, daß vorzugsweise die Höhe einer Abflachung nicht mehr als 1/2 D (Mantelstärke) betragen sollte. Fig. 4a zeigt einen Hohlzylinder mit acht im Inneren angeordneten Abflachungen 3' der Manteloberfläche. Entsprechend dem in Zusammenhang mit Fig. 3 Ausgeführten, kann hiermit je nach Aktorbestückung ein System für die Anregung von Eigenmoden mit n=4 Wellenzügen oder der Fall von zwei um 1/4 gegeneinander versetzten Systemen mit n=2 Wellenzügen realisiert werden.

Eine Konfiguration von vier innen (A bzw. außen B) alternierend polarisierten Aktoren 3, 3'(+,-) für die Anregung von Eigenmoden mit jeweils n=2 Wellenzügen zeigt die Fig. 4b. Ein Vorteil dieser Ausführungsform besteht darin, daß die Abflachungen eine größere lineare Ausdehnung entlang der Umfangsrichtung besitzen können, als bei nur innen- bzw. außenseitiger Anordnung der Abflachungen.

In Fig. 5 sind verschiedene Positionen der Abflachungen bei einem Schwingungsmotor entlang der Zylinderachse illustriert. Fig. 5a zeigt im Längsschnitt eine Ausführungsform, bei der die Abflachungen 3 in der Mitte des Zylinders 10 angeordnet sind. Eine solche Anregung der Zylindermitte ist besonders vorteilhaft bei einem Schwingungsmotor mit Doppelrotor; zur Vereinfachung ist in Fig. 5 lediglich ein Rotor 7 abgebildet. Die Fig. 5b und 5c zeigen Konfigurationen von Abflachungen 8, 8' - (achteckig), bzw. 9, 9' - (sechseckig), die um jeweils λ/4 versetzt außerhalb der Mitte bzw. an den Enden des Zylinders angeordnet sind, wobei die kreissymmetri-schen Abschnitte des Zylinders als Kontaktfläche für - zur Vereinfachung nur in Fig. 5c dargestellte - Rotoren 11 zur Verfügung stehen.

Fig. 6 zeigt einen Querschnitt eines nach dem Stößelprinzip arbeitenden erfindungsgemäßen Schwingungsmotors, bei dem zwischen dem Schwingkörper 12 und dem Rotor 13 lamellenartig Stößel 14 angeordnet sind, die von dem Schwingstator 12 zu Schwingungen angeregt werden und damit in an sich bekannter Weise eine Rotationsbewegung des Rotors 13 bewirken. Erfindungsgemäß erfolgt die Anregung der Stehwellen durch Aktoren, die an Abflachungen 15 an der inneren oder äußeren Mantelfläche angebracht sind. Die Stößel sind in den Abschnitten des Hohlzylinderstators 12 angebracht, in denen die Schwingungsbäuche der stehenden Wellen erzeugt werden. Vorzugsweise sind die Stößel im Bereich der Abflachungen angebracht, um möglichst große Schwingungsamplituden zu erhalten.

## Patentansprüche

1. Schwingungsmotor, bestehend aus einem hohlzylinderförmi-gen Stator (1, 5, 10, 12) aus einem elastischen Material und einem Rotor (7, 11), sowie mindestens zwei Aktoren (2, 4, 6) zur Anregung von Eigenschwingungen des Stators (1, 5, 10), wobei der Rotor zur Umwandlung der Schwingungen in eine kontinuierliche Rotor-Bewegung des Rotors unter Druck in reibschlüssigem Kontakt mit dem Stator steht, **dadurch gekennzeichnet**, daß für die Anregung der Eigenschwingungen des Stators (1, 5, 10) Abflachungen (3, 3', 8, 8', 9, 9' , 15, 15') an der äußeren und/oder inneren Mantelfläche des Hohlzylinders vorgesehen sind, an denen die Aktoren (2, 4, 6) angeordnet sind.

2. Schwingungsmotor gemäß Anspruch 1, dadurch gekennzeichnet, daß piezoelektrische Elemente oder Elektrostriktions- oder Magnetostriktionselemente als Aktoren (2, 4, 6) vorgesehen sind.

3. Schwingungsmotor nach Anspruch 1, dadurch gekennzeichnet, daß mit dem transversalen piezoelektrischen Effekt arbeitende piezoelektrische Aktoren (2, 4, 6) vorgesehen sind.

4. Schwingungsmotor nach Ansprüchen 1 - 3, dadurch gekennzeichnet, daß durch die Abflachungen (3, 3' , 8, 8' , 9, 9') die Mantelstärke D des Hohlzylinders jeweils um weniger als D/2 reduziert ist.

5. Schwingungsmotor gemäß Ansprüchen 1 - 4, dadurch gekennzeichnet, daß zur Anregung von Eigenmoden mit n Wellenzügen entlang des Hohlzylinderumfangs n Aktoren mit gleichsinniger Anregung symmetrisch zur Zylinderachse angeordnet sind.

6. Schwingungsmotor gemäß Ansprüchen 1 und 3 - 5, dadurch gekennzeichnet, daß zur Anregung von Eigenmoden mit n Wellen-zügen entlang des Hohlzylinderumfangs 2 n piezoelektrische Aktoren mit abwechselnder Polarisationsrichtung symmetrisch zur Zylinderachse angeordnet sind.

7. Schwingungsmotor nach Ansprüchen 1 - 6, dadurch gekennzeichnet, daß die Anregung der Eigenschwingungen durch an einer Endseite des Hohlzylinders, oder an beiden Endseiten, oder in der Mitte, oder an mehr als zwei Stellen entlang der Längsachse des Hohlzylinders angeordnete Aktoren erfolgt.

8. Schwingungsmotor gemäß Ansprüchen 1 - 7, dadurch gekennzeichnet, daß der Rotor als Außen- oder als Innenläufer ausgebildet ist.

9. Schwingungsmotor nach Ansprüchen 1 - 8, dadurch gekennzeichnet, daß zur Anregung von Wanderwellen mit einer Wellenlänge von λ zwei oder mehrere, jeweils um λ/4 gegeneinander versetzte Anregesysteme von Aktoren (2, 4, 6) vorgesehen sind.

10. Schwingungsmotor gemäß Ansprüchen 1 - 8, dadurch gekennzeichnet, daß zwischen Stator (12) und Rotor (13) Stößel (14) angeordnet sind, die im Bereich der Schwingungsbäuche der Eigenschwingungen des Stators (12) zur Erzeugung eines Antriebsmoments angebracht sind.
